# EUROPEAN PATENT SPECIFICATION

(11) **EP 1 400 140 B1**
(45) Date of publication and mention of the grant of the patent: **17.12.2008**
(21) Application number: 02741543.9
(22) Date of filing: 25.06.2002
(51) Int. Cl.: H04Q 7/30, H04Q 7/38, H04L 12/56

(54) **HANDLING OF TEMPORARY IDENTITIES IN MOBILE TELEPHONY SYSTEMS**
BEHANDLUNG VORÜBERGEHENDER IDENTITÄTEN IN MOBILFERNSPRECHSYSTEMEN
TRAITEMENT D'IDENTITES TEMPORAIRES DANS DES SYSTEMES DE TELEPHONIE MOBILE

(30) Priority: 25.06.2001 NO 20013194
(43) Date of publication of application: 24.03.2004
(73) Proprietor: TELEFONAKTIEBOLAGET LM ERICSSON (publ), 164 83 Stockholm (SE)
(72) Inventor: BJELLAND, Frode, 4250 Kopervik (NO); GANGSOY, Ole Johnny, N-4870 Fevik (NO); LILLEHIEM, Vidar Oliver, 4870 Fevik (NO)
(74) Representative: Tonscheidt, Andreas
(86) International application number: PCT/NO2002/000229
(87) International publication number: WO 2003/001831

(56) References cited:
- EP-A2- 0 859 531
- WO-A1-00/21319
- WO-A1-00/69097
- WO-A1-01/37603

## Description

### TECHNICAL FIELD

The invention relates to mobile telephony, and in particular how core network nodes could handle the temporary identity used to identify MSs (Mobile Subscribers) in mobile telephony systems. The invention is applicable for any mobile telephony system that uses a temporary identity to identify subscribers or equipment. In particular, one can mention both GSM (Global System for Mobile Communication) and UMTS (Universal Mobile Telecommunication System), and both circuit switched domain and packet switched domain.

### TECHNICAL BACKGROUND

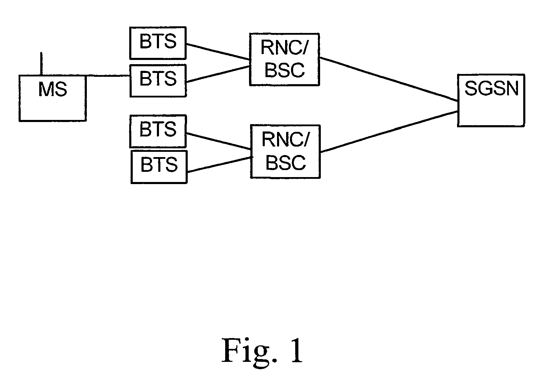

A simplified picture of parts of a mobile telephony system is shown in figure 1. In the figure MS denotes a Mobile Station communicating with a BTS (Base Transceiver Station) over the air interface. The BTS is connected to a BSC (Base Station Controller) or RNC (Radio Network Controller) and further to a SGSN (Serving General Packet Radio Service Support Node). The SGSN controls the session for the MS while the BTS and the RNC or BSC controls the required radio resources.

When an MS connects to a mobile telephony network the first time and after some failure situations, the MS identifies itself (normally upon request from the network) with the IMSI (International Mobile Subscriber Identity), The IMSI identifies the SIM (Subscriber Identity Module) card uniquely.

For security reasons, the IMSI parameter should be used as little as possible on the air interface. Therefore the SGSN that the MS connects to, assigns a temporary identity to the MS. The temporary identity parameter is called P-IMSI (Packet Temporary Mobile Subscriber Identity) for a GPRS (General Packet Radio Service) subscriber. As long as the MS is connected to this SGSN, the MS can identify itself uniquely to the SGSN with the temporary parameter, and in this way the IMSI is not used more than necessary on the air interface.

The SGSN can assign a new temporary identity to an MS whenever seen required by the SGSN although the MS has already got a temporary identity assigned from this SGSN. The MS will then use the last assigned temporary identity.

The use of a temporary identity can however cause problems at fault situations, unless special care is taken.

Say MS A connects to an SGSN, and it is assigned a temporary identity. Then a restart occurs in this SGSN. The SGSN will clear all stored information related to all subscribers, i.e. including subscriber A. The problem occurs if the SGSN also lose track of the temporary identities that were allocated to MSs. If this happens, MS B can connect to the same SGSN after the restart and get assigned the same temporary identity as MS A. This means there now are two MSs using the same temporary identity when they send information to the SGSN.

In GPRS this means that MS A can continue to send data packets, but MS B is charged for the packets. This situation will not be resolved until the SGSN performs an authentication of MS A, e.g. due to a change of Routing Area for MS A. An authentication like this can occur a long time after the restart.

Also, if an SGSN discovers that two MSs are using the same temporary identity, the SGSN might have to release the ongoing sessions for both MSs. The MSs will then have to re-connect to the network and start new sessions. This means that the sessions of MS B is unnecessary released.

WO 00/21319 refers to identification of a mobile station in a cellular network. A temporary identity that is allocated by a network element of the cellular network to the mobile station comprises at least part of an identifier indicating said network element.

EP 0859531 A2 refers to a method for providing a unique temporary identification of a mobile station wherein a new identity comprising an old Temporary Logical Link Identifier (TLLI), an old Routing Area (RA), an identification of a Public Land Mobile Network (PLMN) that is the owner of the old TLLI and the country where the PLMN belong is formed.

### BRIEF DESCRIPTION OF THE INVENTION

It is an object of the present invention to overcome the problems outlined above. The solution involves a method for handling temporary identities in a mobile telephony network that avoids the allocation of the same identity to more than one MS.

According to the invention, a method defined by claim 1, a control node by claim 7, and a mobile telephony network by claim 13 are provided. The dependent claims define further embodiments.

According to the invention SGSNs should keep track of and store the value from which they can assign temporary identities in a storage that survives fault situations like restart.

According to a preferred embodiment of the invention, when a temporary identity is released (i.e. not used by an MS any longer), the value should be re-used (possibly after a guard period). This minimises the risk of double allocation of temporary identities.

However, the scope of the patent is as defined in the appended patent claims.

### BRIEF DESCRIPTION OF THE DRAWINGS

Figure 1 shows a simplified picture of some of the components of a mobile telephony system (prior art),
Figure 2 is a sequence diagram showing the assignment of a temporary identity to an MS when performing an Attach procedure (prior art), and
Figure 3 shows a sequence diagram of a method for assignment of temporary identities to MSs before and after a restart, according to the present invention.

### DETAILED DESCRIPTION OF THE INVENTION

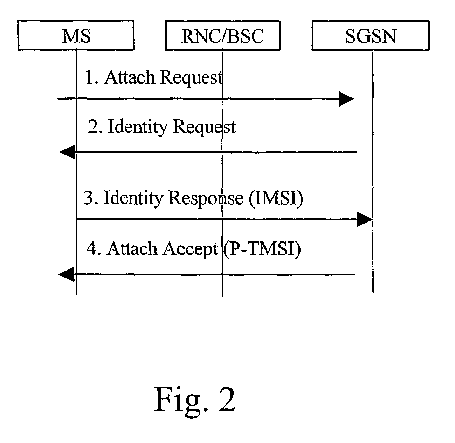

A simplified sequence for an Attach procedure according to prior art is shown in Fig. 2.

In step 1 the MS sends an Attach Request.

If the MS is unknown in the SGSN and the SGSN cannot get hold of the required information from an old SGSN, the SGSN will send an Identity Request as shown in step 2. The MS will in this case return an Identity Response message where it identifies itself with the IMSI.

The SGSN will then assign the temporary identity to the MS and send this in the Attach Accept message as shown in step 4.

When the MS has to identify itself to the SGSN again in subsequent data packets or signalling messages, it will use the allocated temporary identity.

This procedure is modified upon according to the present invention by arranging the SGSN to keep track of the temporary identities that are available and can be assigned to MSs when the MSs connect to the SGSN, without having the risk of double allocation of temporary identities. The SGSN therefore stores the point from which it can assign values in a storage that survives fault situations like e.g. restart. After a restart, the SGSN starts to assign temporary identities from this value, and hence it is ensured that the value range used after the restart has not been used for a long time.

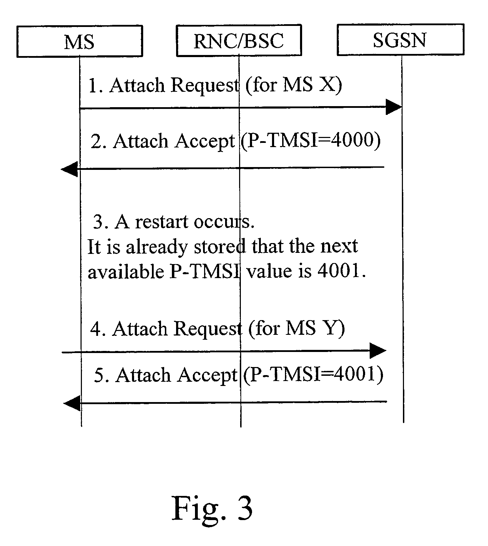

This is shown in Fig. 3 as a simplified sequence for an Attach procedure involving the assignment of temporary identities to MSs before and after a restart.

In step 1 a first MS X sends an Attach Request.

The SGSN assigns the temporary identity P-TMSI=4000 to MS X and sends this in the Attach Accept message as shown in step 2. A possible intermediate step in which the MS identifies itself with the IMSI is not shown.

At this point something happens in the SGSN and a restart occurs, step 3.

In step 4, another MS (Y) sends an Attach Request.

The SGSN has stored the last assigned P-TMSI value in a storage that has survived the restart, and will start assigning temporary identities from this value on. Thus, MS Y will be assigned the P-TMSI value 4001, step 5.

In this way, the SGSN can identify MSs that were connected before the restart but are not aware that a restart of the SGSN has occurred. When such an MS sends a data packet or a signalling message to the SGSN, the SGSN can straight away see that there is no information on this MS in the SGSN. The SGSN can therefore request the MS to disconnect and re-connect itself.

As the temporary identity parameter is 32 bits long and only 2 bits have a predefined setting, there are enough values (1 billion values) for this parameter to be unique over a very long time in an SGSN. In case the temporary identities are coordinated between several SGSNs (i.e. each of the SGSNs cannot use the whole value range itself), it must be ensured that each of the SGSNs get a big enough value range.

Moreover, when a temporary identity is not used any longer due to e.g. that the MS is roaming outside the area of the SGSN, the same value should be re-assigned to a new MS that connects to the SGSN (possibly after some guard period). (Guard periods are commonly used to secure a proper termination of connections, and thus avoid ambiguous allocation of identities). This will ensure that the whole value range is not wrapped or used for a very long time. The value range available for an SGSN should be so large that the SGSN can at least have two restarts before the value range is wrapped, even for big SGSNs.

This is an optional embodiment (albeit a preferred one), that minimises the risk of double allocation of temporary identities.

In another embodiment of the invention, in order to avoid having to keep track of the last used value for every new MS that connects to the SGSN, a block or range of values can be freed for use when a new value is required e.g. after a restart. Thus the values have to be organised in numbered blocks, and the SGSN must store the number of the block currently in use. The MS will still only receive one value when it connects to the SGSN, of course. Alternatively, the SGSN may store the number of the next block that should be used after a restart.

In still another embodiment of the invention, the allocation of blocks is controlled from a central point. This means that in a multiprocessor environment, block of values can be allocated from a central depot.

### An example of figures could be like this:

If an SGSN can handle 1 million simultaneous sessions, a value range of 5 millions temporary identities should be more than enough for this SGSN. This means that the whole value range can be coordinated or distributed on 200 such nodes covering the same geographical area.

## Claims

1. A method in a mobile telephony network, in which a core network node (SGSN) assigns temporary identities to mobile stations in its domain,
**characterized in that** the core network node (SGSN) stores a value from which the core network node (SGSN) can assign a next temporary identity, in a storage that will survive a fault situation, and if the core network node (SGSN) has to restart, it fetches said value from the storage and starts assigning temporary identities based on calculation from this value.

2. The method according to claim 1,
**characterized in that** temporary identity values are organised in numbered blocks, the core network node (SGSN) stores the number of the block currently used in the storage as said value and whenever the core network node (SGSN) restarts, the core network node (SGSN) issues temporary identity values from the subsequent block.

3. The method according to claim 1,
**characterized in that** temporary identity values are organised in numbered blocks, the core network node (SGSN) stores the number of the next-to-be-used block in the storage as said value and whenever the core network node (SGSN) restarts, the core network node (SGSN) issues temporary identity values from this block.

4. The method according to claim 2 or 3,
**characterized in that** the core network node (SGSN) executes a process to contact a central point and receive a block of temporary identity values from which it can issue temporary identities.

5. The method as claimed in any of the preceding claims,
**characterized in that** whenever a temporary identity is released by a mobile station, the core network node (SGSN) will reuse said identity and assign it to another mobile station.

6. The method as claimed in claim 5,
**characterized in that** the core network node (SGSN) re-assigns said identity when a guard period is expired to avoid ambiguous use of temporary identities.

7. A core network node (SGSN) of a mobile telephony network, the core network node (SGSN) being adapted to assign temporary identities to mobile stations in its domain,
**characterized in that** the core network node (SGSN) is adapted to store a value from which the core network node (SGSN) can assign a next temporary identity in a storage that will survives a fault situation, and if the core network node (SGSN) has to restart, the core network node (SGSN) is adapted to fetch said value from the storage and to start assigning temporary identities based on calculation from this value.

8. The core network node (SGSN) according to claim 7,
**characterized in that** temporary identity values are organised in numbered blocks, the core network node (SGSN) is adapted to store the number of the block currently used in the storage as said value and whenever the core network node (SGSN) restarts, the core network node (SGSN) is adapted to issue temporary identity values from the subsequent block.

9. The core network node (SGSN) according to claim 7,
**characterized in that** temporary identity values are organised in numbered blocks, the core network node (SGSN) is adapted to store the number of the next-to-be-used block in the storage as said value and whenever the core network node (SGSN) restarts, the core network node (SGSN) is adapted to issue temporary identity values from this block.

10. The core network node (SGSN) according to claim 8, or 9,
**characterized in that** this core network node (SGSN) is adapted to execute a process for contacting a central point and receiving a block of temporary identity values from which it can issue temporary identities.

11. The core network node (SGSN) as claimed in any of the claims 7 to 10,
**characterized in that** whenever a temporary identity is released by a mobile station, the core network node (SGSN) is adapted to reuse said identity and assign it to another mobile station.

12. The core network node (SGSN) as claimed in claim 11,
**characterized in that** the core network node (SGSN) is adapted to re-assign said identity when a guard period is expired to avoid ambiguous use of temporary identities.

13. A mobile telephony network comprising a core network node (SGSN) according to any of the claims 7 to 12.

## Patentansprüche

1. Verfahren in einem Mobiltelefonienetz, in welchem ein Kernnetzknoten (SGSN) Mobilstationen in seinem Bereich temporäre Identitäten zuweist,
**dadurch gekennzeichnet, dass** der Kernnetzknoten (SGSN) einen Wert, von welchem der Kernnetzknoten (SGSN) eine nächste temporäre Identität zuweisen kann, in einem Speicher speichert, der eine Fehlersituation überlebt, und der Kernnetzknoten (SGSN), wenn er neu starten muss, den Wert aus dem Speicher abruft und mit dem Zuweisen von temporären Identitäten auf der Basis einer Berechnung von diesem Wert beginnt.

2. Verfahren nach Anspruch 1,
**dadurch gekennzeichnet, dass** temporäre Identitätswerte in nummerierten Blöcken organisiert sind, der Kernnetzknoten (SGSN) die Nummer des gerade verwendeten Blocks im Speicher als den Wert speichert und der Kernnetzknoten (SGSN), wann immer der Kernnetzknoten (SGSN) neu startet, temporäre Identitätswerte aus dem nachfolgenden Block ausgibt.

3. Verfahren nach Anspruch 1,
**dadurch gekennzeichnet, dass** temporäre Identitätswerte in nummerierten Blöcken organisiert sind, der Kernnetzknoten (SGSN) die Nummer des nächsten zu verwendenden Blocks im Speicher als den Wert speichert und der Kernnetzknoten (SGSN), wann immer der Kernnetzknoten (SGSN) neu startet, temporäre Identitätswerte aus diesem Block ausgibt.

4. Verfahren nach Anspruch 2 oder 3,
**dadurch gekennzeichnet, dass** der Kernnetzknoten (SGSN) einen Prozess ausführt, um einen zentralen Punkt zu kontaktieren und einen Block von temporären Identitätswerten zu empfangen, aus welchem er temporäre Identitäten ausgeben kann.

5. Verfahren nach einem der vorhergehenden Ansprüche,
**dadurch gekennzeichnet, dass** der Kernnetzknoten (SGSN), wann immer eine temporäre Identität durch eine Mobilstation freigegeben wird, die Identität wieder verwendet und sie einer anderen Mobilstation zuweist.

6. Verfahren nach Anspruch 5,
**dadurch gekennzeichnet, dass** der Kernnetzknoten (SGSN) die Identität wieder zuweist, wenn eine Sicherheitsperiode abgelaufen ist, um eine nicht eindeutige Verwendung von temporären Identitäten zu vermeiden.

7. Kernnetzknoten (SGSN) eines Mobiltelefonienetzes, wobei der Kernnetzknoten (SGSN) so ausgelegt ist, dass er Mobilstationen in seinem Bereich temporäre Identitäten zuweist,
**dadurch gekennzeichnet, dass** der Kernnetzknoten (SGSN) so ausgelegt ist, dass er einen Wert, von welchem der Kernnetzknoten (SGSN) eine nächste temporäre Identität zuweisen kann, in einem Speicher speichert, der eine Fehlersituation überlebt, und der Kernnetzknoten so ausgelegt ist, dass er, wenn der Kernnetzknoten (SGSN) neu starten muss, den Wert aus dem Speicher abruft und mit dem Zuweisen von temporären Identitäten auf der Basis einer Berechnung von diesem Wert beginnt.

8. Kernnetzknoten (SGSN) nach Anspruch 7, **dadurch gekennzeichnet, dass** temporäre Identitätswerte in nummerierten Blöcken organisiert sind, der Kernnetzknoten (SGSN) so ausgelegt ist, dass er die Nummer des gerade verwendeten Blocks im Speicher als den Wert speichert, und der Kernnetzknoten (SGSN so ausgelegt ist, dass er, wann immer der Kernnetzknoten (SGSN) neu startet, temporäre Identitätswerte aus dem nachfolgenden Block ausgibt.

9. Kernnetzknoten (SGSN) nach Anspruch 7, **dadurch gekennzeichnet, dass** temporäre Identitätswerte in nummerierten Blöcken organisiert sind, der Kernnetzknoten (SGSN) so ausgelegt ist, dass er die Nummer des nächsten zu verwendenden Blocks im Speicher als den Wert speichert, und der Kernnetzknoten (SGSN) so ausgelegt ist, dass er, wann immer der Kernnetzknoten (SGSN) neu startet, temporäre Identitätswerte aus diesem Block ausgibt.

10. Kernnetzknoten (SGSN) nach Anspruch 8 oder 9,
**dadurch gekennzeichnet, dass** dieser Kernnetzknoten (SGSN) so ausgelegt ist, dass er einen Prozess zum Kontaktieren eines zentralen Punkts und Empfangen eines Blocks von temporären Identitätswerten, aus welchem er temporäre Identitäten ausgeben kann, ausführt.

11. Kernnetzknoten (SGSN) nach einem der Ansprüche 7 bis 10,
**dadurch gekennzeichnet, dass** der Kernnetzknoten so ausgelegt ist, dass er, wann immer eine temporäre Identität durch eine Mobilstation freigegeben wird, die Identität wieder verwendet und sie einer anderen Mobilstation zuweist.

12. Kernnetzknoten (SGSN) nach Anspruch 11,
**dadurch gekennzeichnet, dass** der Kernnetzknoten (SGSN) so ausgelegt ist, dass er die Identität wieder zuweist, wenn eine Sicherheitsperiode abgelaufen ist, um eine nicht eindeutige Verwendung von temporären Identitäten zu vermeiden.

13. Mobiltelefonienetz, umfassend einen Kernnetzknoten (SGSN) nach einem der Ansprüche 7 bis 12.

## Revendications

1. Procédé dans un réseau de téléphonie mobile, dans lequel un noeud de réseau central (SGSN) assigne des identités temporaires à des stations mobiles dans son domaine,
**caractérisé en ce que** le noeud de réseau central (SGSN) mémorise une valeur à partir de laquelle le noeud de réseau central (SGSN) peut assigner une identité temporaire suivante, dans une mémoire qui survivra à une situation de panne, et si le noeud de réseau central (SGSN) doit redémarrer, il va chercher ladite valeur dans la mémoire et commence à assigner des identités temporaires sur la base du calcul de cette valeur.

2. Procédé selon la revendication 1,
**caractérisé en ce que** les valeurs d'identité temporaire sont organisées en blocs numérotés, le noeud de réseau central (SGSN) mémorise le numéro du bloc actuellement utilisé dans la mémoire comme ladite valeur et à chaque fois que le noeud de réseau central (SGSN) redémarre, le noeud de réseau central (SGSN) émet des valeurs d'identité temporaire à partir du bloc suivant.

3. Procédé selon la revendication 1,
**caractérisé en ce que** les valeurs d'identité temporaire sont organisées en blocs numérotés, le noeud de réseau central (SGSN) mémorise le numéro du bloc suivant à utiliser dans la mémoire comme ladite valeur et à chaque fois que le noeud de réseau central (SGSN) redémarre, le noeud de réseau central (SGSN) émet des valeurs d'identité temporaire à partir de ce bloc.

4. Procédé selon la revendication 2 ou 3,
**caractérisé en ce que** le noeud de réseau central (SGSN) exécute un processus afin de contacter un point central et reçoit un bloc de valeurs d'identité temporaire à partir duquel il peut émettre des identités temporaires.

5. Procédé selon une quelconque des revendications précédentes,
**caractérisé en ce que** à chaque fois qu'une identité temporaire est libérée par une station mobile, le noeud de réseau central (SGSN) réutilisera ladite identité et l'assignera à une autre station mobile.

6. Procédé selon la revendication 5,
**caractérisé en ce que** le noeud de réseau central (SGSN) réassigne ladite identité quand une période de garde est arrivée à expiration afin d'éviter une utilisation ambiguë des identités temporaires.

7. Noeud de réseau central (SGSN) d'un réseau de téléphonie mobile, le noeud de réseau central (SGSN) étant adapté afin d'assigner des identités temporaires aux stations mobiles dans son domaine,
**caractérisé en ce que** le noeud de réseau central (SGSN) est adapté afin de mémoriser une valeur à partir de laquelle le noeud de réseau central (SGSN) peut assigner une identité temporaire suivante dans une mémoire qui survivra à une situation de panne, et si le noeud de réseau central (SGSN) doit redémarrer, le noeud de réseau central (SGSN) est adapté afin d'aller chercher ladite valeur dans la mémoire et de commencer à assigner des identités temporaire sur la base du calcul à partir de cette valeur.

8. Noeud de réseau central (SGSN) selon la revendication 7, **caractérisé en ce que** les valeurs d'identité temporaire sont organisées en blocs numérotés, le noeud de réseau central (SGSN) est adapté afin de mémoriser le numéro du bloc actuellement utilisé dans la mémoire comme ladite valeur et à chaque fois que le noeud de réseau central (SGSN) redémarre, le noeud de réseau central (SGSN) est adapté afin d'émettre des valeurs d'identité temporaire à partir du bloc suivant.

9. Noeud de réseau central (SGSN) selon la revendication 7, **caractérisé en ce que** les valeurs d'identité temporaire sont organisées en blocs numérotés, le noeud de réseau central (SGSN) est adapté afin de mémoriser le numéro du bloc suivant à utiliser dans la mémoire comme ladite valeur et à chaque fois que le noeud de réseau central (SGSN) redémarre, le noeud de réseau central (SGSN) est adapté afin d'émettre des valeurs d'identité temporaire à partir de ce bloc.

10. Noeud de réseau central (SGSN) selon la revendication 8 ou 9,
**caractérisé en ce que** ce noeud de réseau central (SGSN) est adapté afin d'exécuter un processus afin de contacter un point central et recevoir un bloc de valeurs d'identité temporaire à partir duquel il peut émettre des identités temporaires.

11. Noeud de réseau central (SGSN) selon une quelconque des revendications 7 à 10,
**caractérisé en ce que** à chaque fois qu'une identité temporaire est libérée par une station mobile, le noeud de réseau central (SGSN) est adapté afin de réutiliser ladite identité et l'assigner à une autre station mobile.

12. Noeud de réseau central (SGSN) selon la revendication 11,
**caractérisé en ce que** le noeud de réseau central (SGSN) est adapté afin de réassigner ladite identité quand une période de garde est arrivée à expiration afin d'éviter une utilisation ambiguë des identités temporaires.

13. Réseau de téléphonie mobile comprenant un noeud de réseau central (SGSN) selon une quelconque des revendications 7 à 12.
